# EUROPÄISCHE PATENTSCHRIFT

(11) **EP 3 586 430 B1**
(45) Veröffentlichungstag und Bekanntmachung des Hinweises auf die Patenterteilung: **03.08.2022**
(21) Anmeldenummer: 18705546.2
(22) Anmeldetag: 13.02.2018
(51) Int. Cl.: H02K 5/16, H02K 7/116, F16C 33/76, F16C 25/08, F16C 19/06, F16C 35/04

(54) **ANTRIEB, UMFASSEND EINEN ELEKTROMOTOR UND EIN GETRIEBE, UND VERFAHREN ZUM HERSTELLEN EINES ANTRIEBS**
DRIVE, COMPRISING AN ELECTRIC MOTOR AND A TRANSMISSION, AND METHOD FOR PRODUCING A DRIVE
MÉCANISME D'ENTRAÎNEMENT COMPRENANT UN MOTEUR ÉLECTRIQUE ET UNE TRANSMISSION, ET PROCÉDÉ DE FABRICATION D'UN MÉCANISME D'ENTRAÎNEMENT

(30) Priorität: 21.02.2017 DE 102017001649
(43) Veröffentlichungstag der Anmeldung: 01.01.2020
(73) Patentinhaber: SEW-EURODRIVE GmbH & Co. KG, 76646 Bruchsal (DE)
(72) Erfinder: DENEFLEH, Roland, 64683 Einhausen (DE); BÜHN, Olivier, 76703 Kraichtal (DE); UNTERBURG, Henning, 76227 Karlsruhe (DE); KERSCHBAUM, Martin, 76139 Karlsruhe (DE)
(86) Internationale Anmeldenummer: PCT/EP2018/025039
(87) Internationale Veröffentlichungsnummer: WO 2018/153550

(56) Entgegenhaltungen:
- DE-A1- 2 343 302
- DE-A1-102005 030 216
- DE-A1-102010 003 727
- DE-B3-102015 009 091
- DE-C- 718 618
- US-A- 6 094 797
- US-A1- 2016 099 632

## Beschreibung

Die Erfindung betrifft einen Antrieb, umfassend einen Elektromotor und ein Getriebe, und ein Verfahren zum Herstellen des Antriebs.

Es ist allgemein bekannt, dass ein elektromotorischer Antrieb einen Elektromotor und ein Getriebe aufweist.

Aus der US 2015 / 0 349 606 A1 ist ein Elektrogerät bekannt.

Aus der DE 10 2012 113 093 A1 ist ein Lagerhalter bekannt.

Aus der GB 2523765 A ist ein Leistungsteil für ein Straßenreinigungsgerät bekannt.

Aus der DE 103 19 187 A1 ist eine elektrische Maschine bekannt.

Aus der DE 10 2015 009 091 B3 ist eine Anordnung zur Leistungsübertragung und Signalübertragung bei einer Antriebseinheit bekannt.

Aus der US 2016/099 632 A1 ist als nächstliegender Stand der Technik ein Antrieb bekannt.

Aus der DE 10 2010 003727 A1 ist eine Lagerung für eine Schnecke in einem Lenkgetriebe bekannt.

Aus der DE 23 43 302 A1 ist eine Schleif-Poliermaschine bekannt.

Aus der DE 10 2005 030 216 A1 ist eine Vorrichtung zum Verbinden einer Getriebe-Antriebseinheit mit einem Karosserieteil eines Kraftfahrzeugs bekannt.

Aus der DE 10 2015 009 091 B3 ist eine Anordnung zur Leistungs- und Signalübertragung bei einer aus wenigstens zwei Einheiten bestehenden Antriebseinrichtung bekannt.

Aus der US 6 094 797 A ist ein Verfahren zum Installieren eines Starter-Generators in einem Flugzeug bekannt.

Aus der DE 718 618 C ist eine Stromerzeugungsanlage für Fahrzeugbeleuchtung bekannt.

Der Erfindung liegt daher die Aufgabe zugrunde, einen Antrieb vereinfacht herstellbar weiterzubilden.

Erfindungsgemäß wird die Aufgabe bei dem Antrieb nach den in Anspruch 1 und bei dem Verfahren nach den in Anspruch 14, 15 oder 13 angegebenen Merkmalen gelöst.

Wichtige Merkmale der Erfindung bei dem Antrieb sind, dass der Antrieb ein Elektromotor und ein Getriebe umfasst,
wobei das Gehäuse des Getriebes ein Gehäuseteil und ein Deckelteil aufweist, insbesondere welche miteinander verbunden sind,
wobei eine Welle des Getriebes über Lager gelagert ist,
wobei ein erstes Lager der Lager in einer am Gehäuseteil ausgeformten Lageraufnahme aufgenommen ist,
wobei ein zweites Lager der Lager in einer am Deckelteil ausgeformten Lageraufnahme aufgenommen ist,
wobei zwischen jeweiliger Lageraufnahme und jeweiligem Lager ein jeweiliges Dichtelement, insbesondere Dichtelement aus Gummi oder einem Elastomer, insbesondere O-Ring, angeordnet ist, welches jeweils elastisch verformt ist, so dass das jeweilige Lager vom jeweiligen Dichtelement gegen eine jeweilige Stufe der Welle gedrückt ist,
insbesondere so, dass die Lager der Welle gegeneinander verspannt sind.

Von Vorteil ist dabei, dass die Lager gegeneinander verspannt werden, also an eine jeweilige Stufe der Welle angedrückt werden. Die Andrückkraft ist die mittels der elastischen Verformung der Dichtungen erzeugte jeweilige Federkraft. Dabei ist diejenige Federkraft, welche von der elastischen Verformung der im Gehäuseteil aufgenommenen Dichtung erzeugt wird, entgegengerichtet zu derjenigen Federkraft, welche von der elastischen Verformung der im Deckelteil aufgenommenen Dichtung erzeugt wird.

Erfindungsgemäß bewirken die Dichtungen nicht nur eine Abdichtung des Innenraums des Getriebes nach außen, sondern fungieren auch als Federelement für Verspannen der Lager gegeneinander. Somit sind separate zusätzliche Spannelemente einsparbar und auf diese Weise die Herstellung vereinfacht.

Erfindungsgemäß begrenzen an dem Gehäuseteil ausgeformte, zum in der Lageraufnahme des Gehäuseteils aufgenommenen Lager hervorragende Stegbereiche die elastische Verformung der Dichtung,
insbesondere wobei die Stegbereiche auf jeweils demselben Radialabstand angeordnet sind und/oder in Umfangsrichtung voneinander beabstandet sind und/oder wobei die Stegbereiche an einem jeweiligen Lager anliegen. Von Vorteil ist dabei, dass die Stegbereiche ohne zusätzlichen Aufwand herstellbar sind, da sie im Gussteil mit bloßer Formgebung erzeugt werden.

Erfindungsgemäß weist das Gehäuseteil Lageraufnahmen auf, wobei in jeder Lageraufnahme jeweils ein Lagersitz vorgesehen ist,
insbesondere wobei der jeweilige Lagersitz in Umfangsrichtung unterbrochen ausgeführt ist,
wobei an der vom Lagersitz abgewandten Seite, insbesondere Außenseite, des Gehäuseteils ebene, insbesondere zueinander in Flucht liegende, Auflageflächenbereiche ausgeformt sind,
insbesondere also die Auflageflächenbereiche in einer gemeinsamen Ebene vorgesehen sind, insbesondere angeordnet sind.
Von Vorteil ist dabei, dass das Gehäuseteil als Gussteil fertigbar ist, wobei der Rohguss aber entsprechend rau ist.

Durch Einpressen des Stempelwerkzeugs mit seinen zylindrischen Stempeln ist eine präzise Fertigung ermöglicht. Insbesondere ist die relative Positionierung der Lagersitze mit hoher Präzision herstellbar, weil die Stempel in einem Stempelwerkzeug gemeinsam angeordnet sind. Außerdem ist jeder der Lagersitze passgenau herstellbar. Damit das Einpressen stabil erfolgen kann, ist auf der anderen Seite des Gehäuseteils ein stabiles Anlegen einer Arbeitsebene ermöglicht. Hierzu sind die ebenen Außenoberflächenbereiche des Gehäuseteils vorgesehen.

Somit ist eine einfache Herstellung ermöglicht.

Erfindungsgemäß weist das Deckelteil Lageraufnahmen auf, wobei in jeder Lageraufnahme jeweils ein Lagersitz vorgesehen ist,
insbesondere wobei der jeweilige Lagersitz in Umfangsrichtung unterbrochen ausgeführt ist,
wobei an der vom Lagersitz abgewandten Seite, insbesondere Außenseite, des Deckelteils ebene, insbesondere zueinander in Flucht liegende, Auflageflächenbereiche ausgeformt sind,
insbesondere also die Auflageflächenberieche in einer gemeinsamen Ebene vorgesehen sind, insbesondere angeordnet sind. Von Vorteil ist dabei, dass das Deckelteil als Gussteil fertigbar ist, wobei der Rohguss aber entsprechend rau ist.

Durch Einpressen des Stempelwerkzeugs mit seinen zylindrischen Stempeln ist eine präzise Fertigung ermöglicht. Insbesondere ist die relative Positionierung der Lagersitze mit hoher Präzision herstellbar, weil die Stempel in einem Stempelwerkzeug gemeinsam angeordnet sind. Außerdem ist jeder der Lagersitze passgenau herstellbar. Damit das Einpressen stabil erfolgen kann, ist auf der anderen Seite des Deckelteils ein stabiles Anlagen einer Arbeitsebene ermöglicht. Hierzu sind die ebenen Außenoberflächenbereiche des Deckelteils vorgesehen.

Bei einer vorteilhaften Ausgestaltung ist im jeweiligen Lagersitz ein jeweiliges Lager passgenau aufgenommen. Von Vorteil ist dabei, dass eine präzise Lagerung ermöglicht ist.

Bei einer vorteilhaften Ausgestaltung weist der Elektromotor eine Rotorwelle und ein Motorgehäuse auf, wobei die Rotorwelle mittels zumindest eines Lagers drehbar gelagert ist im Motorgehäuse,
wobei ein Adapterflansch mit dem Motorgehäuse drehfest verbunden ist
wobei das Gehäuse des Getriebes ein Gehäuseteil und ein Deckelteil aufweist, insbesondere welche miteinander verbunden sind,
wobei am Gehäuseteil ein Bajonettführungsbereich ausgebildet ist,
wobei der Adapterflansch einen Laschenbereich, insbesondere Bajonettnase, aufweist, insbesondere zum Hintergreifen des Bajonettführungsbereichs.

Von Vorteil ist dabei, dass Motor und Getriebe mittels Bajonettverbindung verbindbar sind. Somit ist ein einfaches Herstellen des Antriebs ermöglicht. Außerdem ist auch eine vereinfachte Wartung, insbesondere ein vereinfachtes Austauschen des Motors ermöglicht.

Des Weitere ist die Bajonettverbindung zur Zentrierung des Motors relativ zum Getriebe verwendbar.

Bei einer vorteilhaften Ausgestaltung sind Adapterflansch und Motorflansch einstückig, insbesondere einteilig, miteinander ausgebildet. Von Vorteil ist dabei, dass eine geringere Teilezahl notwendig ist und somit ein geringerer Lagerraum für die Herstellung benötigt wird. Bei einer vorteilhaften Ausgestaltung ragt der Bajonettführungsbereich in eine Ausnehmung des Gehäuseteils hinein,
wobei der Bajonettführungsbereich einen Radialabstandsbereich überdeckt, welcher von dem von dem Laschenbereich überdeckten Radialabstandsbereich umfasst ist, insbesondere also radial weniger ausgedehnt ist als der Laschenbereich,
wobei der vom Bajonettführungsbereich überdeckte Umfangswinkelbereich kleiner ist als der von der Ausnehmung überdeckte Umfangswinkelbereich,
wobei der von dem Laschenbereich überdeckte Umfangswinkelbereich betragsmäßig kleiner ist als die Differenz des von der Ausnehmung überdeckten Umfangswinkelbereichs und dem von dem Bajonettführungsbereich überdeckten Umfangswinkelbereich,
insbesondere so, dass der Laschenbereich axial in die Ausnehmung einführbar ist und durch Verdrehen den Bajonettführungsberiech hintergreift. Von Vorteil ist dabei, dass der am Adapterflansch ausgeformte Laschenbereich axial einführbar ist in die Ausnehmung, wobei der vom Laschenbereich überdeckte Radialabstandsbereich den vom Bajonettführungsbereich überdeckten Radialabstandsbereich umfasst. Nur weil in dem vom Bajonettführungsbereich überdeckten Radialabstandsbereich der Bajonettführungsbereich in Umfangsrichtung weniger ausgedehnt ist als die Ausnehmung ist der Laschenbereich in die Ausnehmung einführbar und kann somit mit seinem Hinterschnittsbereich den Bajonettführungsabschnitt hintergreifen, wenn der Laschenbereich in Umfangsrichtung gedreht wird. Somit umgreift der Laschenabschnitt den Bajonettführungsbereich, wobei er derart eng anliegt, dass er vom Bajonettführungsberiech beim Drehen in Umfangsrichtung axial verschoben wird. Dies wird mit einer entsprechenden Kontur des Bajonettführungsbereichs bewirkt.

Bei einer vorteilhaften Ausgestaltung nimmt die axiale Breite des Bajonettführungsbereichs in Umfangsrichtung zu,
insbesondere
- so, dass der am Adapterflansch ausgebildete Laschenbereich bei der Drehung in Umfangsrichtung vom Bajonettführungsberiech axial verschoben wird, insbesondere so, dass die axiale Position proportional zur Drehwinkelstellung des Laschenbereichs ist,
- und/oder so, dass der Adapterflansch beim zum Gehäuseteil relativen Verdrehen des Adapterflansches in Umfangsrichtung zum Gehäuseteil hingedrückt wird.

Von Vorteil ist dabei, dass mittels der zunehmenden Breite ein verbessertes, also engeres, Anliegen des Laschenbereichs am Bajonettführungsabschnitt erreichbar ist und somit eine Führung, insbesondere Verschiebung des Laschenbereichs in axialer Richtung, bewirkt ist.

Bei einer vorteilhaften Ausgestaltung ist die Ausnehmung in Umfangsrichtung begrenzt durch eine Halterippe, welche sich von einer Lageraufnahme des Lagers der eintreibenden Welle in radialer Richtung erstreckt.

Bei einer vorteilhaften Ausgestaltung ist die Ausnehmung entgegen der Umfangsrichtung begrenzt durch eine weitere Halterippe, welche sich von einer Lageraufnahme des Lagers der eintreibenden Welle in radialer Richtung erstreckt,

insbesondere wobei der Bajonettführungsberiech die weitere Halterippe berührt, wobei Bajonettführungsbereich, weitere Halterippe und Lageraufnahme einstückig, insbesondere einteilig, ausgebildet, insbesondere ausgeformt, sind. Von Vorteil ist dabei, dass eine stabile Halterung der Lageraufnahme erreichbar ist. Somit ist die Lageraufnahme selbst sehr dünnwandig, insbesondere ringartig oder hohlzylindrisch, ausführbar. Die Halterippen erstrecken sich zu einem radial weiter außenliegenden Bereich des Gehäuseteils, so dass dieser radial weiter außenliegende Beriech rahmenartig ausgeführt ist und somit die Stabilität verbesserte ist. Der rahmenartige Bereich muss nicht rein rechteckförmig ausgeformt sein, sondern darf auch teilweise mit Material gefüllt sein, so dass die Stabilität weiter verbessert ist.

Bei einer vorteilhaften Ausgestaltung ist am Boden der topfförmig ausgeformten Lageraufnahme zwischen Lageraufnahme und dem darin aufgenommenen Lager eine elastisch verformte Dichtung angeordnet,
wobei am Boden der Lageraufnahme Stegbereiche axial hervorragen, an welchen das Lager anliegt, so dass die Verformung der Dichtung mittels der Stegbereiche begrenzt ist,
wobei die elastisch verformte Dichtung das Lager gegen eine an der eintreibenden Welle ausgeformte Stufe drückt,
insbesondere wobei die eintreibende Welle mittels des Lagers relativ zur Lageraufnahme drehbar gelagert ist. Von Vorteil ist dabei, dass die Dichtung einerseits das Lager gegen eine Stufe der Welle drückt und andererseits als Dichtung verwendbar ist. Dabei ist wichtig, dass das Andrücken mittels der Stegbereiche begrenzt ist und somit keine übergroßen Anpresskräfte erzeugbar sind.

Bei einer vorteilhaften Ausgestaltung weist das Deckelteil ebenfalls topfförmig ausgeformte Lageraufnahmen auf,
wobei Halterippen von der jeweiligen Lageraufnahme zu einem umlaufenden Randbereich des Deckelteils sich erstrecken,
wobei am jeweiligen Boden der topfförmigen Lageraufnahme axial hervorragende Stegbereiche ausgeformt sind, welche die elastische Verformung einer jeweiligen Dichtung begrenzen,
insbesondere wobei die jeweilige Dichtung das jeweilige Lager auf eine jeweilige an der jeweiligen Welle ausgebildete Stufe drückt. Von Vorteil ist dabei, dass die Dichtung einerseits abdichtet und andererseits das Lager axial sichert und andrückt gegen eine Stufe der vom Lager gelagerten Welle.

Bei einer vorteilhaften Ausgestaltung ist in einer Ausnehmung des Gehäuseteils ein am Gehäuseteil abgestützter Bolzen angeordnet, welcher von einem Federelement insbesondere axial zum Adapterflansch gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung ist in einer Ausnehmung des Adapterflansches ein am Adapterflansch abgestützter Bolzen angeordnet, welcher von einem Federelement insbesondere axial zum Gehäuseteil gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung sind zum Gehäuseteil hin axial hervorragende Stegbereiche am Adapterflansch ausgeformt, welche jeweils in eine jeweilige Ringnut des Gehäuseteils hineinragen und somit als Führung bei der Verdrehbewegung des Adapterflansches relativ zum Gehäuseteil wirksam sind,
wobei der vom jeweiligen Stegbereich überdeckte Radialabstandsbereich unabhängig vom Umfangswinkel ist,
insbesondere wobei der jeweilige Stegbereich sich in Umfangsrichtung erstreckt,
insbesondere wobei die Stegberieche zwar auf demselben Radialabstand angeordnet sind, aber voneinander in Umfangsrichtung beabstandet sind. Von Vorteil ist dabei, dass eine einfache Herstellung einer Zentrierung und Führung erreichbar ist. Insbesondere ist eine Ringnut verwendbar, in welche die Stegbereiche hineinragen und somit als Führung fungieren. Von Vorteil ist dabei, dass eine Führung und Zentrierung mittels der Stegbereiche in einfacher Weise erreichbar ist. Denn die Stegbereiche sind kreisabschnittweise am Adapterflansch ausgeformt und ragen teilweise in eine am Gehäuseteil ausgebildete Ringnut hinein, so dass eine Führung beim Betätigen der Bajonettverbindung bewirkt ist, also beim Verdrehen des Adapterflansches relativ zum Gehäuseteil.

Wichtige Merkmale bei dem Verfahren zum Herstellen eines Antriebs sind, dass in einem ersten Verfahrensschritt das Gehäuseteil durch Gießen hergestellt wird,
in einem zweiten Verfahrensschritt ein Stempelwerkzeug in Lageraufnahmen des Gehäuseteils eingepresst wird, so dass Lagersitze passgenau hergestellt werden,
insbesondere wobei das Stempelwerkzeug mindestens zwei Stempel aufweist, wobei jeder der Stempel zur Ausformung eines jeweiligen Lagersitzes vorgesehen ist,
insbesondere wobei in einem dritten Verfahrensschritt im jeweiligen Lagersitz jeweils ein Lager aufgenommen wird.

Von Vorteil ist dabei, dass eine einfache Herstellung durch Gießen verwendbar ist und durch Einpressen des Stempelwerkzeugs die Lagersitze hochpräzise anordenbar und fertigbar sind.

Entsprechend wird zeitlich unabhängig in einem ersten Herstellverfahrensschritt das Deckelteil durch Gießen hergestellt,
in einem zweiten Herstellverfahrensschritt ein Stempelwerkzeug in Lageraufnahmen des Deckelteils eingepresst wird, so dass Lagersitze passgenau hergestellt werden, insbesondere wobei das Stempelwerkzeug mindestens zwei Stempel aufweist, wobei jeder der Stempel zur Ausformung eines jeweiligen Lagersitzes vorgesehen ist,
insbesondere wobei in einem dritten Herstellverfahrensschritt im jeweiligen Lagersitz jeweils ein Lager aufgenommen wird. Von Vorteil ist dabei, dass das Deckelteil ebenso wie das Gehäuseteil mit präzise gefertigten Lagersitzen ausstattbar ist.

Weiter vorteilhaft ist ein Verfahren zum Herstellen eines Antriebs,
wobei der Antrieb einen Elektromotor und ein Getriebe aufweist,
wobei das Gehäuse des Getriebes ein Gehäuseteil und ein Deckelteil aufweist,
wobei das Verfahren zum Herstellen des Deckelteils zeitlich unabhängig vom Verfahren zum Herstellen des Gehäuseteils ausgeführt wird,
insbesondere wobei die Verfahrensschritte und die Herstellverfahrensschritte zeitlich unabhängig voneinander ausgeführt werden,
wobei nach Beendigung der beiden Verfahren Gehäuseteil und Deckelteil miteinander verbunden werden.

Weitere Vorteile ergeben sich aus den Unteransprüchen.

Die Erfindung wird nun anhand von Abbildungen näher erläutert:

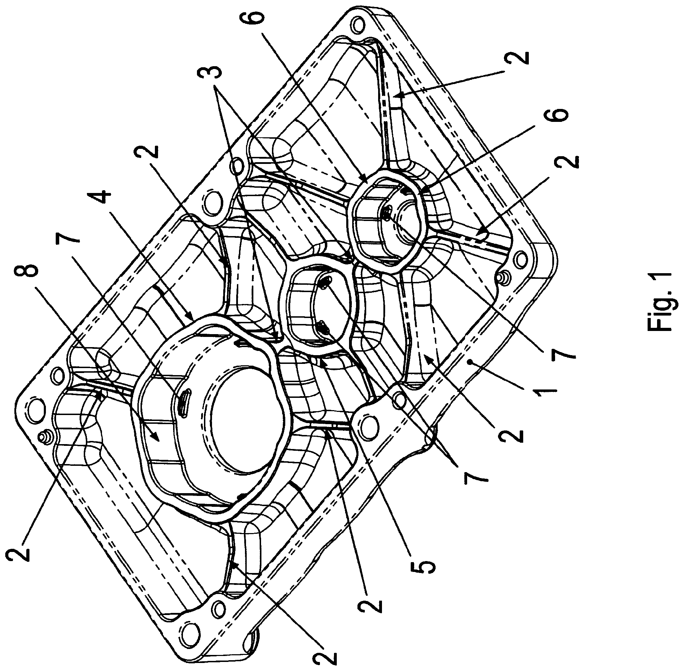

In der Figur 1 ist eine Schrägansicht eines Deckelteils 1 des erfindungsgemäßen Antriebs aus einer ersten Blickrichtung dargestellt.

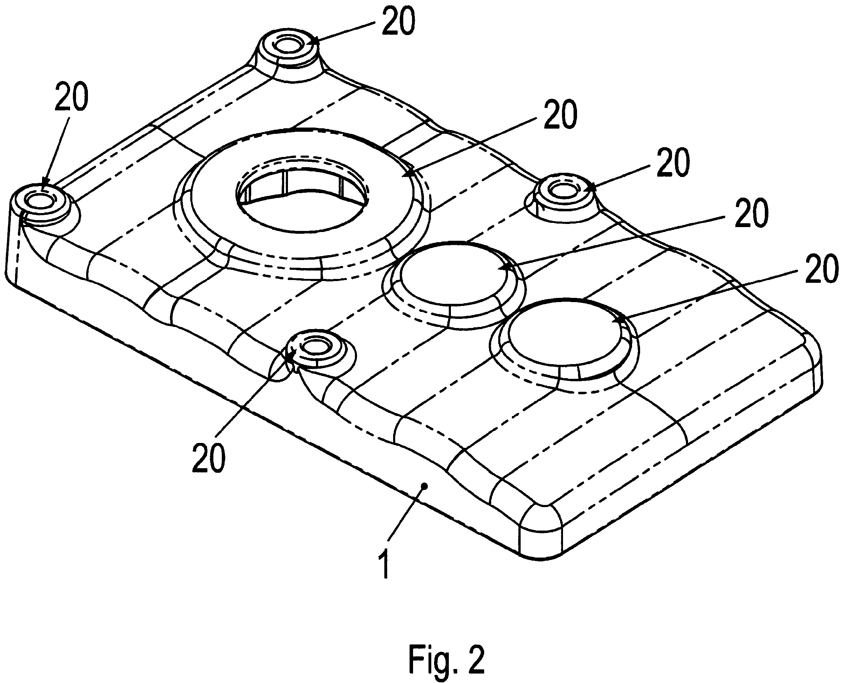

In der Figur 2 ist eine Schrägansicht des Deckelteils 1 aus einer anderen Blickrichtung dargestellt.
In der Figur 3 ist eine Seitenansicht des Deckelteils 1 dargestellt.

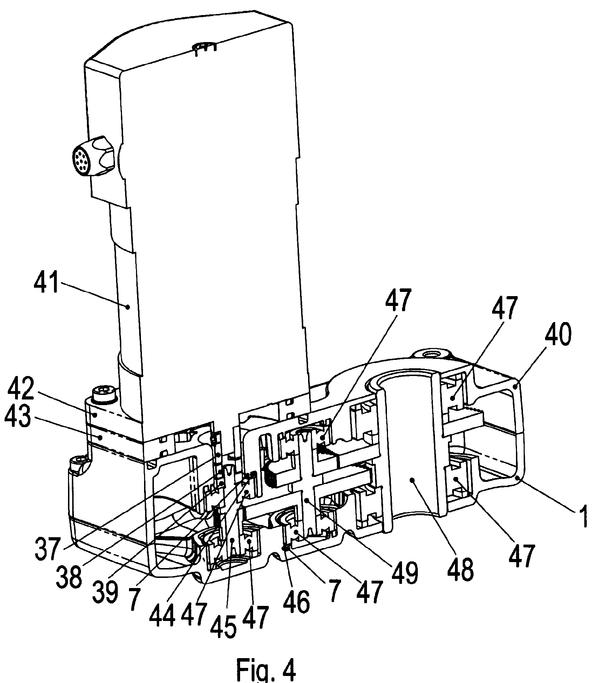

In der Figur 4 ist der Antrieb angeschnitten in Schrägansicht dargestellt.

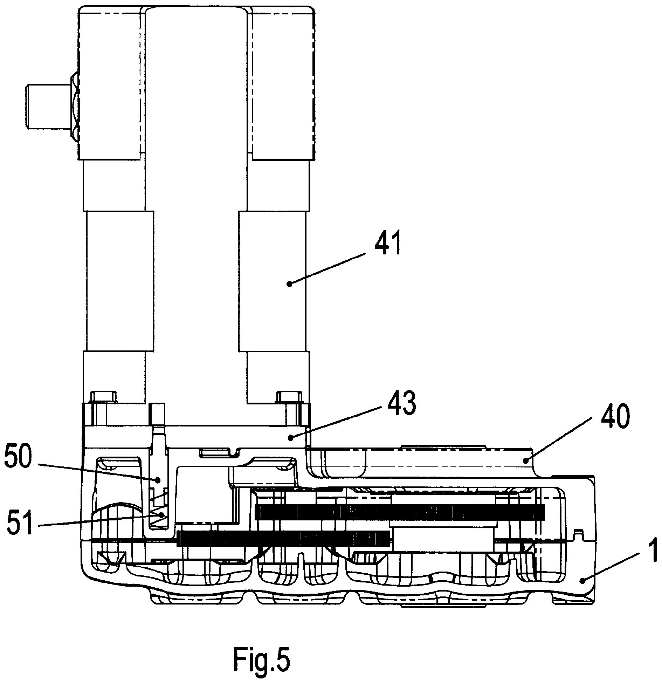

In der Figur 5 ist eine Schnittansicht des Antriebs dargestellt, wobei ein Bolzen 50 zur Arretierung sichtbar ist.
In der Figur 6 ist eine Schrägansicht eines Gehäuseteils 40 des Antriebs in Schrägansicht dargestellt.

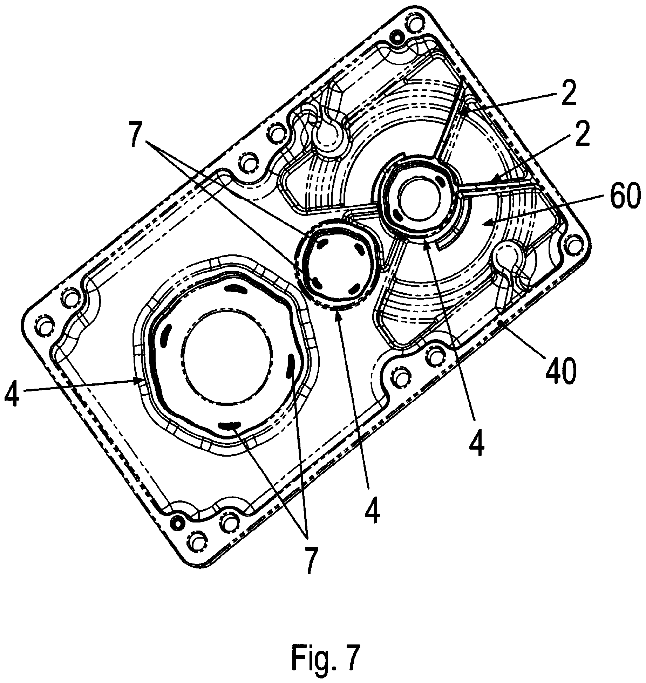

In der Figur 7 ist das Gehäuseteil 40 in einer Schrägansicht in einer anderen Blickrichtung gezeigt.
In der Figur 8 ist der Antrieb, aufweisend Getriebe und Elektromotor, in Schrägansicht gezeigt.

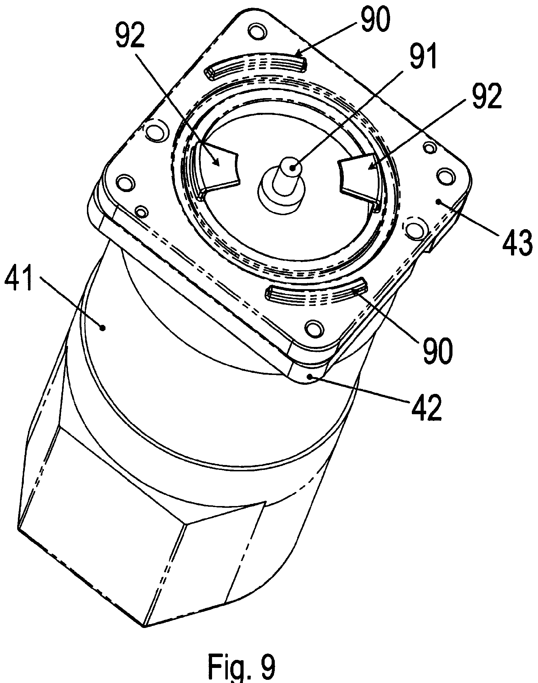

In der Figur 9 ist der Elektromotor des Antriebs in Schrägansicht dargestellt.

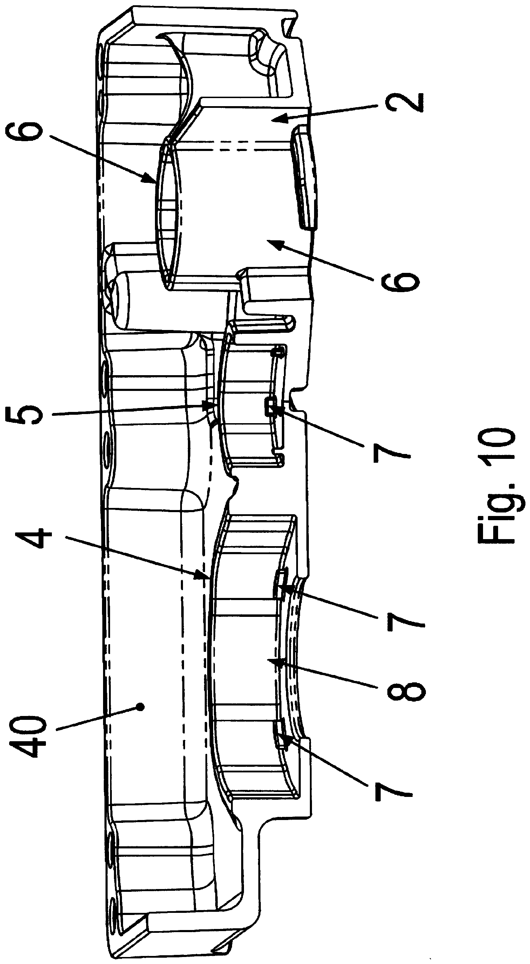

In der Figur 10 ist das Gehäuseteil 40 angeschnitten und in Schrägansicht dargestellt, wobei die Blickrichtung beinahe der Blickrichtung einer Seitenansicht entspricht.

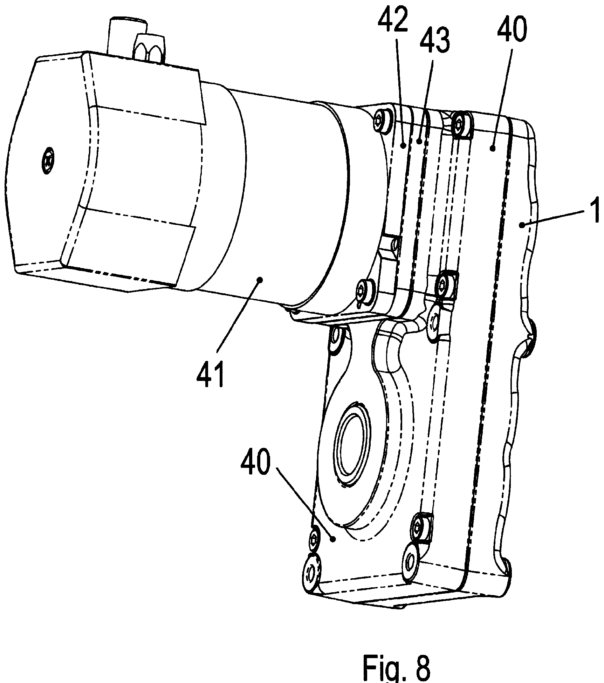

Wie in Figur 8 dargestellt, weist der Antrieb ein von einem Elektromotor angetriebenes Getriebe auf.

Wie in den Figuren dargestellt, weist dabei der Elektromotor ein Motorgehäuse 41 auf, welches mit einem Motorflansch 42 verbunden ist, welches mit dem Adapterflansch 43 verbunden ist.

Das Gehäuse des Getriebes weist ein Gehäuseteil 40 auf und ein mit dem Gehäuseteil 40 dicht verbundenes Deckelteil 1.

Der Adapterflansch 43 ist mit dem Gehäuseteil 40 verbunden, wobei hier eine Bajonettverbindung verwendet ist.

Im Motorgehäuse 41 ist der Stator des Elektromotors aufgenommen und Lager zur Lagerung einer Rotorwelle des Elektromotors. Die Rotorwelle ist mittels einer Kupplung mit der eintreibenden Welle 45 des Getriebes drehfest verbunden. Hierzu weist die Kupplung ein erstes Kupplungsteil 37 auf, welches Drehfest mit der Rotorwelle verbunden ist, ein Zwischenteil 38, welches vorzugsweise aus einem Kunststoff oder Elastomer gefertigt ist, und ein zweites Kupplungsteil 39, welches drehfest mit der eintreibenden Welle 45 verbunden ist.

Erstes Kupplungsteil 37 und zweites Kupplungsteil 39 sind vorzugsweise jeweils aus Metall ausbildbar, wobei das Zwischenteil 38 aus einem weniger harten Material ausbildbar sind.

Die Kupplung ist vorzugsweise nach Art einer Klauenkupplung aufgebaut. Daher ist in Umfangsrichtung zwischen den beiden Kupplungsteilen (37, 39) das Zwischenteil 38 angeordnet. Somit sind Drehmomentstöße abdämpfbar.

Mit der eintreibenden Welle ist ein erstes Zahnrad drehfest verbunden, das im Eingriff steht mit einem weiteren Zahnrad, das mit einer Zwischenwelle 49 drehfest verbunden ist. Ein drittes Zahnrad ist ebenfalls mit der Zwischenwelle 49 drehfest verbunden, welches im Eingriff ist mit einem mit der abtreibenden Welle 48 drehfest verbundenen Zahnrad.

Jede Welle ist über Lager 47 drehbar gelagert, welche jeweils entweder im Deckelteil 1 oder im Gehäuseteil 40 aufgenommen sind.

Zur Aufnahme des jeweiligen Lagers 47 ist am Gehäuseteil 40 beziehungsweise am Deckelteil 1 jeweils eine Lageraufnahme (4, 5, 6) ausgeformt. Die Wandung der jeweiligen Lageraufnahme (4, 5, 6) ist dünnwandig ausgeführt und umgibt das Lager in jeweiliger Umfangsrichtung vollständig. Die Lageraufnahme (4, 5, 6) überdeckt in axialer Richtung jeweils einen axialen Beriech, welcher den vom jeweils aufgenommenen Lager 47 in axialer Richtung überdeckten axialen Bereich umfasst.

Die Lageraufnahmen (4, 5, 6) sind jeweils einstückig, insbesondere einteilig, entweder am Gehäuseteil 40 oder am Deckelteil 1 ausgeformt.

An der Innenwandung der jeweiligen Lageraufnahme (4, 5, 6) mittels eines Formwerkzeugs ist ein zylindrischer Raumbereich bereitgestellt, in welchem das jeweilige Lager 47 aufgenommen ist und anliegt. In denjenigen Umfangswinkelbereichen, in welchen der von der Lageraufnahme (4, 5, 6) umfasste Bereich radial weiter ausgedehnt ist, ist die Berührfläche zwischen Lageraufnahme (4, 5, 6) und Lager 47 unterbrochen.

Zwischen Gehäuseteil 40 und jeweils in einer am Gehäuseteil 40 ausgeformten Lageraufnahme (4, 5, 6) ist eine Dichtung angeordnet, welche das Lager 47 gegen eine an der von diesem jeweiligen Lager 47 gelagerten Welle ausgebildete Stufe drückt. Hierzu wird die Dichtung elastisch verformt, wobei diese Verformung durch jeweilige Stegbereiche 7 begrenzt wird, welche am Gehäuseteil 40 ausgeformt sind.

Die Stegbereiche 7, welche am Gehäuseteil 40 ausgeformt sind und jeweils dasselbe Lager 47 berühren, sind auf gleichem Radialabstand zur Drehachse der von diesem Lager 47 gelagerten Welle angeordnet. In Umfangsrichtung sind die Stegbereiche 7 dieses jeweiligen Lagers 47 voneinander beabstandet, insbesondere regelmäßig.

Die Lageraufnahmen (4, 5, 6) kragen aus dem restlichen Gehäuseteil 40 beziehungsweise Deckelteil 1 axial hervor.

Dieses restliche Deckelteil 1 ist wannenförmig ausgeführt und weist dabei einen Bodenbereich auf, aus dem die Lageraufnahmen (4, 5, 6) hervorragen.

Am restlichen Deckelteil 1 ist ein äußerer, umlaufender Randbereich angeordnet, der einen axialen Bereich überdeckt, welcher auch von den Lageraufnahmen (4, 5, 6) überdeckt wird.

Vier, in Umfangsrichtung voneinander beabstandete Halterippen 2 erstrecken sich von diesem Randbereich bis zu der Lageraufnahme 4, welche für die Aufnahme des Lagers 47 der abtreibenden Welle 48 vorgesehen ist. Der Abstand der Halterippen 2 in Umfangsrichtung ist nicht regelmäßig. Somit sind Resonanzschwingungen reduzierbar.

Eine Verbindungsrippe 3 ist von den Halterippen 2 der Lageraufnahme 4, welche für die Aufnahme des Lagers 47 der Zwischenwelle 49 vorgesehen ist, beabstandet und erstreckt sich von der Lageraufnahme 4 zu der benachbarten Lageraufnahme 5.

Zwei weitere Halterippen 2 sind am Deckelteil 1 ausgeformt, welche sich von der Lageraufnahme 5 bis zum Randbereich des Deckelteils 1 erstrecken.

Die Lageraufnahme 6 des Lagers 47 der eintreibenden Welle 45 ist ebenfalls mittels vier Halterippen 2 stabilisiert, welche sich jeweils von der Lageraufnahme 6 zum Randberiech des Deckelteils 1 erstrecken und in Umfangsrichtung voneinander beabstandet sind.

Außerdem ist eine weitere Verbindungrippe 3 vorgesehen, welche sich von der Lageraufnahme 5 zur Lageraufnahme 6 erstreckt.

Zwischen dem jeweils aufgenommenen Lager 47 und dem Deckelteil 1, insbesondere dem Bodenbereich des Deckelteils 1, ist eine Dichtung angeordnet, welche in axialer Richtung auf das jeweilige Lager 47 drückt, so dass dieses an einer Stufe der jeweils durch das jeweilige Lager 47 gelagerten Welle angedrückt ist. Die elastische Verformung der Dichtung ist durch die am Deckelteil 1, insbesondere am Bodenbereich, ausgeformten Stegbereiche 7 begrenzt.

Somit ist das jeweilige Lager 47 mittels der jeweiligen Dichtung 46 angedrückt und abgedichtet.

Das Deckelteil 1 ist mit dem Gehäuseteil 40 schraubverbunden und mittels einer zwischengeordneten Dichtung abgedichtet, also dicht verbunden.

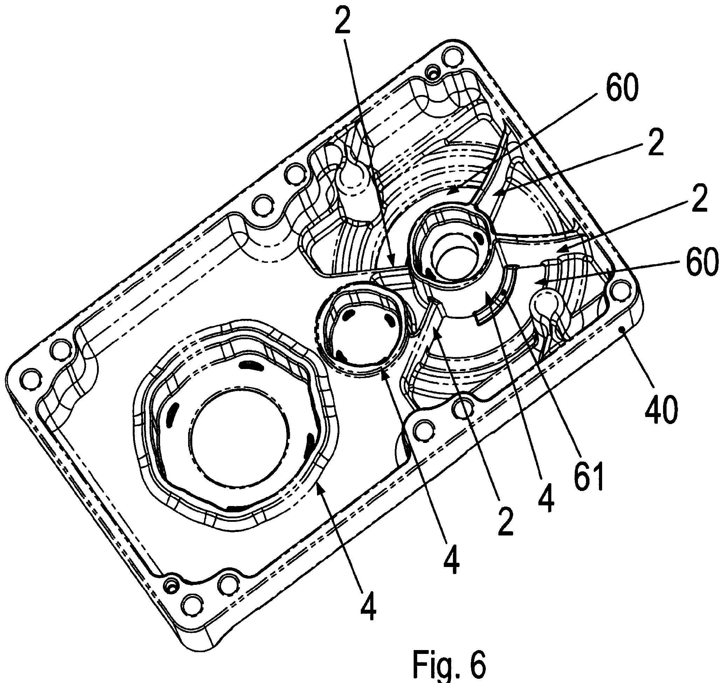

Wie in Figur 6 gezeigt, weist das Gehäuseteil 40 ebenfalls einen außen umlaufenden Randbereich auf. Für die eintreibende Welle 45 weist das Gehäuseteil 40 eine Lageraufnahme 4 auf, welche ein Lager der eintreibenden Welle 45 aufnimmt. Vier in Umfangsrichtung voneinander beabstandete Halterippen 2 erstrecken sich jeweils von dem Randbereich zur Lageraufnahme 4, insbesondere so dass diese stabilisiert ist, insbesondere gegen Schwingungen und/oder über die eintreibende Welle 45 eingeleitete Querkräfte.

Dieser Randbereich überdeckt einen axialen Beriech, welcher den vom im Gehäuseteil 40 aufgenommenen Lager der eintreibenden Welle 45 überdeckten axialen Beriech umfasst.

Der Bodenbereich des Gehäuseteils 40 weist eine erste und eine zweite Ausnehmung 60 auf, die zur Einführung von Laschenbereichen 92, insbesondere Bajonettnasen, vorgesehen sind.

In Umfangsrichtung ist die erste Ausnehmung 60 durch eine erste der Halterippen 2 begrenzt. Entgegen der Umfangsrichtung ist die zweite Ausnehmung 60 durch eine zweite der Halterippen 2 begrenzt.

Die andere Ausnehmung 60 ist durch die beiden anderen Halterippen 2 in Umfangsrichtung beziehungsweise entgegen der Umfangsrichtung begrenzt.

Von der Lagerausnehmung 4 ragt ein erster Bajonettführungsbereich 61 radial hervor, insbesondere in die Ausnehmung 60. Der erste Bajonettführungsbereich 61 erstreckt sich über einen geringeren Umfangswinkelbereich als die Ausnehmung 60 und ist radial weniger weit ausgedehnt als die Ausnehmung 60.

Von der Lagerausnehmung 4 ragt auch ein zweiter Bajonettführungsbereich 61 radial hervor, insbesondere in die andere Ausnehmung 60. Der zweite Bajonettführungsbereich 61 erstreckt sich ebenfalls über einen geringeren Umfangswinkelbereich als die zweite Ausnehmung 60 und ist radial ebenfalls weniger weit ausgedehnt als die zweite Ausnehmung 60.

Am Adapterflansch 43 ist eine mittig angeordnete Ausnehmung ausgeformt, wobei voneinander in Umfangsrichtung beabstandete Laschenbereiche 92 nach radial innen in die Ausnehmung hervorragen.

In Umfangsrichtung ist jeder der beiden Laschenbereiche 92 weniger ausgedehnt als die Differenz der Ausdehnung der Ausnehmung 60 in Umfangsrichtung und der Ausdehnung des Bajonettführungsbereichs 61.

Somit ist beim Ansetzen des Adapterflansches 43 an das Gehäuseteil 40 der jeweilige Laschenbereich 92 in den in Umfangsrichtung vorhandenen Freiraum zwischen der Begrenzung der Ausnehmung 60, also der ersten Halterippe 2, und dem Bajonettführungsbereich 61 einführbar und durch relatives Verdrehen des Adapterflansches als Hintergriff hinter den Bajonettführungsbereich 61 wirksam wird.

Der Bajonettführungsbereich weist eine in Umfangsrichtung zunehmende axiale Position auf, so dass beim relativen Verdrehen der Adapterflansch 43 immer näher oder stärker auf das Gehäuseteil 40 gedrückt wird. Die Verdrehbewegung ist begrenzt einerseits durch das Anliegen des Adapterflansches 43 an dem Gehäuseteil 40 und andererseits auch durch die zweite Halterippe 2, welche die Verdrehbewegung in Umfangsrichtung begrenzt.

Vorzugsweise nimmt die axiale Wandstärke des Bajonettführungsbereichs 61 in Umfangsrichtung zu, so dass der hintergreifende Laschenbereich 92 immer weiter in axiale Richtung verschoben wird und somit der Adapterflansch 43 an das Gehäuseteil 40 angedrückt wird.

Zur Arretierung ist ein Bolzen 50 in einem am Gehäuseteil 40 ausgeformten Sackloch geführt, welcher von einem Federelement 51, welches am Boden des Sacklochs abgestützt ist, zum Adapterflansch 43 hingedrückt wird.

Sobald bei der Verdrehbewegung eine im Adapterflansch 43 eingebrachte Ausnehmung in Flucht mit dem Sackloch des Gehäuseteils 40 kommt, wird daher der Bolzen 50 vom Federelement 51 in die Ausnehmung teilweise hineingedrückt. Somit ragt dann der axial ausgerichtete Bolzen 50 mit seinem aus dem Gehäuseteil 40 hervorragenden Bereich in die Ausnehmung des Adapterflansches 43 hinein, wodurch die Verdrehbewegung arretiert wird.

Am Adapterflansch 43 sind axial zum Gehäuseteil 40 hervorragende Stegbereiche 90 ausgeformt, welche in eine Ringnut des Gehäuseteils 40 hineinragen und somit als Führung bei der Verdrehbewegung wirksam sind. Der jeweilige Stegbereich 90 erstreckt sich in Umfangsrichtung, wobei die Stegberieche zwar auf demselben Radialabstand angeordnet sind, aber voneinander in Umfangsrichtung beabstandet.

Jede der Wellen (45, 48, 49) ist über zwei Lager gelagert, wobei jedes der Lager von einer Dichtung (44, 46) axial beaufschlagt wird, so dass die Lager gegeneinander vorgespannt sind. Hierbei ist ein erstes der Lager einer ersten Welle der Wellen (45, 48, 49) im Deckelteil 1 und das andere Lager dieser ersten Welle im Gehäuseteil 40 aufgenommen. Die erste Dichtung ist im Deckelteil 1 aufgenommen und drückt gegen das erste Lager der ersten Welle. Die zweite Dichtung ist im Gehäuseteil 40 aufgenommen und drückt gegen das zweite Lager der ersten Welle. Somit wird das erste Lager von der ersten Dichtung gegen eine erste Stufe an der ersten Welle gedrückt und das zweite Lager von der zweiten Dichtung gegen eine zweite Stufe der ersten Welle gedrückt. Somit sind die Lager gegeneinander verspannt angeordnet. Die Dichtungen sind jeweils als O-Ring oder als Flachdichtung ausführbar.

Zur Herstellung präzise gefertigter Lagersitze für die aufgenommenen Lager aller Wellen des Getriebes wird nach dem Herstellen mittels Gießen ein Verformwerkzeug eingesetzt.

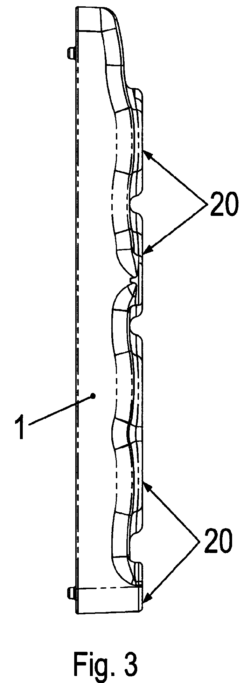

Das Deckelteil 1 wird also in einem ersten Herstellverfahrensschritt als Gussteil hergestellt. Danach wird das Deckelteil 1 mit seiner Außenseite, also mit der beim später hergestellten Antrieb vom Motor abgewandten Seite, auf eine ebene Fläche aufgelegt. Hierzu weist das Deckelteil 1, wie in Figur 3 dargestellt, plane, also ebene Auflageflächenbereiche 20 auf. Somit liegt das Deckelteil 1 stabil auf der ebenen Fläche, beispielsweise ein Arbeitstisch, auf. Danach wird als Formwerkzeug ein Stempel in jede der Lageraufnahmen eingepresst, wobei der Stempel zylindrisch geformt ist. Auf diese Weise werden die Lagersitze in den Lageraufnahmen auf Passungsmaß gebracht. Vorzugsweise werden die Stempel für die Lageraufnahmen synchron eingepresst. Somit ist die relative Lage und Ausrichtung der Lagersitze mit hoher Genauigkeit gewährleistbar. Ein Verkippen des Deckelteils 1 beim Einpressen des Stempelwerkzeugs ist somit verhindert.

Auf diese Weise sind also zylindrische Abschnitte 8 der Wandung der jeweiligen Lageraufnahme passgenau fertigbar. Allerdings sind diese Abschnitte nicht zusammenhängend gefertigt, sondern in Umfangsrichtung voneinander beabstandet. Somit wechseln die zylindrischen Abschnitte der Wandung der jeweiligen Lageraufnahme ab mit jeweils benachbarten Abschnitten, welche radial weiter ausgedehnt sind.

Das beschrieben Verfahren zur Fertigung passgenauer Lagersitze wird auch beim Gehäuseteil 40 ausgeführt. Hierzu weist dieses Gehäuseteil 40 auf der dem Motor zugewandten Seite ebene Flächenabschnitte auf, so dass es stabil auf einer ebenen Fläche auflegbar und die Stempelwerkzeuge zur passgenauen Herstellung der Lagersitze synchron in die Lageraufnahmen einpressbar sind. Ein Verkippen des Gehäuseteils 40 beim Einpressen des Stempelwerkzeugs ist somit verhindert. Somit sind die Lagersitze relativ zueinander hochgenau ausgerichtet und auch von ihrer jeweiligen Form her passgenau gefertigt.

Bei einem weiteren erfindungsgemäßen Ausführungsbeispiel sind Adapterflansch 43 und Motorflansch 42 einstückig, also einteilig, miteinander ausbildbar.

### Bezugszeichenliste

1 Deckelteil
2 Halterippe
3 Verbindungsrippe
4 Lageraufnahme
5 Lageraufnahme
6 Lageraufnahme
7 Stegbereich
8 zylindrischer Abschnitt der Wandung der Lageraufnahme 4
20 Auflageflächenbereich
37 erstes Kupplungsteil
38 Zwischenteil
39 zweites Kupplungsteil
40 Gehäuseteil
41 Motorgehäuse
42 Motorflansch
43 Adapterflansch
44 Dichtung
45 eintreibende Welle
46 Dichtung
47 Lager
48 abtreibende Welle
49 Zwischenwelle
50 Bolzen
51 Federelement
60 Ausnehmung für Bajonettnase
61 Bajonettführungsbereich
90 Stegbereich
91 Rotorwelle
92 Laschenbereich, insbesondere Bajonettnase

## Patentansprüche

1. Antrieb, umfassend einen Elektromotor und ein Getriebe,
wobei das Gehäuse des Getriebes ein Gehäuseteil (40) und ein Deckelteil (1) aufweist, welche miteinander verbunden sind,
wobei eine Welle (48) des Getriebes über Lager (47) gelagert ist,
wobei ein erstes Lager der Lager (47) in einer am Gehäuseteil (40) topfförmig ausgeformten Lageraufnahme (4, 5, 6) aufgenommen ist,
wobei ein zweites Lager der Lager in einer am Deckelteil (1) topfförmig ausgeformten Lageraufnahme (4, 5, 6) aufgenommen ist,
**dadurch gekennzeichnet, dass**
am Boden der jeweiligen ausgeformten Lageraufnahme und dem darin aufgenommenen Lager (47) ein jeweiliges Dichtelement (46) angeordnet ist, welches jeweils elastisch verformt ist, so dass das jeweilige Lager (47) vom jeweiligen Dichtelement (46) gegen eine jeweilige Stufe der Welle (48) gedrückt ist, und so dass die Lager der Welle gegeneinander verspannt sind,
wobei am Boden der Lageraufnahme (4, 5, 6) Stegbereiche (7) axial hervorragen, an welchen das Lager anliegt, so dass die Verformung des jeweiligen Dichtelements (46) mittels der Stegbereiche (7) begrenzt ist,
wobei Halterippen (2) von der jeweiligen Lageraufnahme (4, 5, 6) zu einem umlaufenden Randbereich des Deckelteils sich erstrecken,
wobei an der Innenwandung der jeweiligen Lageraufnahme (4, 5, 6) mittels eines Formwerkzeugs ein zylindrischer Raumbereich bereitgestellt ist, in welchem das jeweilige Lager (47) aufgenommen ist und anliegt,
wobei in denjenigen Umfangswinkelbereichen, in welchen der von der Lageraufnahme (4, 5, 6) umfasste Bereich radial weiter ausgedehnt ist, die Berührfläche zwischen Lageraufnahme (4, 5, 6) und Lager (47) unterbrochen ist.

2. Antrieb nach Anspruch 1,
**dadurch gekennzeichnet, dass**
die Stegbereiche (7) auf jeweils demselben Radialabstand angeordnet sind und/oder in Umfangsrichtung voneinander beabstandet sind und/oder wobei die Stegbereiche (7) an einem jeweiligen Lager (47) anliegen.

3. Antrieb nach einem der vorangegangenen Ansprüche,
**dadurch gekennzeichnet, dass**
die Welle mittels des Lagers (47) relativ zur Lageraufnahme (4, 5, 6) drehbar gelagert ist.

4. Antrieb nach einem der vorangegangenen Ansprüche,
**dadurch gekennzeichnet, dass**
an der vom Lagersitz abgewandten Seite, insbesondere Außenseite, des Gehäuseteils (40) ebene, insbesondere zueinander in Flucht liegende, Auflageflächenbereiche (20) ausgeformt sind,
insbesondere also die Auflageflächenbereiche (20) in einer gemeinsamen Ebene vorgesehen sind, insbesondere angeordnet sind.

5. Antrieb nach Anspruch 1,
**dadurch gekennzeichnet, dass**
das Deckelteil (1) Lageraufnahmen (4, 5, 6) aufweist, wobei in jeder Lageraufnahme (4, 5, 6) jeweils ein Lagersitz vorgesehen ist,
insbesondere wobei der jeweilige Lagersitz in Umfangsrichtung unterbrochen ausgeführt ist,
wobei an der vom Lagersitz abgewandten Seite, insbesondere Außenseite, des Deckelteils (1) ebene, insbesondere zueinander in Flucht liegende, Auflageflächenbereiche (20) ausgeformt sind,
insbesondere also die Auflageflächenberieche in einer gemeinsamen Ebene vorgesehen sind, insbesondere angeordnet sind.

6. Antrieb nach einem der vorangegangenen Ansprüche,
**dadurch gekennzeichnet, dass**
im jeweiligen Lagersitz ein jeweiliges Lager (47) passgenau aufgenommen ist.

7. Antrieb nach einem der vorangegangenen Ansprüche,
**dadurch gekennzeichnet, dass**
der Elektromotor eine Rotorwelle und ein Motorgehäuse (41) aufweist, wobei die Rotorwelle mittels zumindest eines Lagers (47) drehbar gelagert ist im Motorgehäuse (41),
wobei ein Adapterflansch (43) mit dem Motorgehäuse (41) drehfest verbunden ist,
am Gehäuseteil (40) ein Bajonettführungsbereich ausgebildet ist,
wobei der Adapterflansch (43) einen Laschenbereich, insbesondere Bajonettnase, aufweist, insbesondere zum Hintergreifen des Bajonettführungsbereichs.

8. Antrieb nach Anspruch 7,
**dadurch gekennzeichnet, dass**
der Bajonettführungsbereich in eine Ausnehmung des Gehäuseteils (40) hineinragt,
wobei der Bajonettführungsbereich einen Radialabstandsbereich überdeckt, welcher von dem von dem Laschenbereich überdeckten Radialabstandsbereich umfasst ist, insbesondere also radial weniger ausgedehnt ist als der Laschenbereich,
wobei der vom Bajonettführungsbereich überdeckte Umfangswinkelbereich kleiner ist als der von der Ausnehmung überdeckte Umfangswinkelbereich,
wobei der von dem Laschenbereich überdeckte Umfangswinkelbereich betragsmäßig kleiner ist als die Differenz des von der Ausnehmung überdeckten Umfangswinkelbereichs und dem von dem Bajonettführungsbereich überdeckten Umfangswinkelbereich,
insbesondere so, dass der Laschenbereich axial in die Ausnehmung einführbar ist und durch Verdrehen den Bajonettführungsberiech hintergreift.

9. Antrieb nach Anspruch 7 oder 8,
**dadurch gekennzeichnet, dass**
die axiale Breite des Bajonettführungsbereichs in Umfangsrichtung zunimmt,
insbesondere
- so, dass der am Adapterflansch (43) ausgebildete Laschenbereich bei der Drehung in Umfangsrichtung vom Bajonettführungsberiech axial verschoben wird, insbesondere so, dass die axiale Position proportional zur Drehwinkelstellung des Laschenbereichs ist,
- und/oder so, dass der Adapterflansch (43) beim zum Gehäuseteil (40) relativen Verdrehen des Adapterflansches (43) in Umfangsrichtung zum Gehäuseteil (40) hingedrückt wird.

10. Antrieb nach einem der Ansprüche 7 bis 9,
**dadurch gekennzeichnet, dass**
die Ausnehmung in Umfangsrichtung begrenzt ist durch eine Halterippe (2), welche sich von einer Lageraufnahme (4, 5, 6) des Lagers (47) der eintreibenden Welle in radialer Richtung erstreckt,
und/oder dass
die Ausnehmung entgegen der Umfangsrichtung begrenzt ist durch eine weitere Halterippe (2), welche sich von einer Lageraufnahme (4, 5, 6) des Lagers (47) der eintreibenden Welle in radialer Richtung erstreckt,
insbesondere wobei der Bajonettführungsberiech die weitere Halterippe (2) berührt, wobei Bajonettführungsbereich, weitere Halterippe (2) und Lageraufnahme (4, 5, 6) einstückig, insbesondere einteilig, ausgebildet, insbesondere ausgeformt, sind.

11. Antrieb nach einem der Ansprüche 7 bis 10,
**dadurch gekennzeichnet, dass**
in einer Ausnehmung des Gehäuseteils (40) ein am Gehäuseteil (40) abgestützter Bolzen angeordnet ist, welcher von einem Federelement insbesondere axial zum Adapterflansch (43) gedrückt wird, insbesondere zur Arretierung,
oder dass
in einer Ausnehmung des Adapterflansches (43) ein am Adapterflansch (43) abgestützter Bolzen angeordnet ist, welcher von einem Federelement insbesondere axial zum Gehäuseteil (40) gedrückt wird, insbesondere zur Arretierung.

12. Antrieb nach einem der Ansprüche 7 bis 11,
**dadurch gekennzeichnet, dass**
zum Gehäuseteil (40) hin axial hervorragende Stegbereiche (7) am Adapterflansch (43) ausgeformt sind, welche jeweils in eine jeweilige Ringnut des Gehäuseteils (40) hineinragen und somit als Führung bei der Verdrehbewegung des Adapterflansches (43) relativ zum Gehäuseteil (40) wirksam sind,
wobei der vom jeweiligen Stegbereich (7) überdeckte Radialabstandsbereich unabhängig vom Umfangswinkel ist,
insbesondere wobei der jeweilige Stegbereich (7) sich in Umfangsrichtung erstreckt,
insbesondere wobei die Stegberieche zwar auf demselben Radialabstand angeordnet sind, aber voneinander in Umfangsrichtung beabstandet sind.

13. Verfahren zum Herstellen eines Antriebs nach einem der Ansprüche 1 bis 12,
wobei der Antrieb einen Elektromotor und ein Getriebe aufweist,
wobei das Gehäuse des Getriebes ein Gehäuseteil (40) und ein Deckelteil aufweist,
**dadurch gekennzeichnet, dass**
in einem ersten Verfahrensschritt das Gehäuseteil (40) durch Gießen hergestellt wird,
danach in einem zweiten Verfahrensschritt ein Stempelwerkzeug in Lageraufnahmen (4, 5, 6) des Gehäuseteils (40) eingepresst wird, so dass Lagersitze passgenau hergestellt werden, insbesondere wobei das Stempelwerkzeug mindestens zwei Stempel aufweist, wobei jeder der Stempel zur Ausformung eines jeweiligen Lagersitzes vorgesehen ist,
insbesondere wobei in einem zeitlich nach dem zweiten Verfahrensschritt nachfolgenden, dritten Verfahrensschritt im jeweiligen Lagersitz jeweils ein Lager (47) aufgenommen wird.

14. Verfahren zum Herstellen eines Antriebs nach einem der Ansprüche 1 bis 12,
wobei der Antrieb einen Elektromotor und ein Getriebe aufweist,
wobei das Gehäuse des Getriebes ein Gehäuseteil (40) und ein Deckelteil aufweist,
**dadurch gekennzeichnet, dass**
in einem ersten Herstellverfahrensschritt das Deckelteil durch Gießen hergestellt wird,
danach in einem zweiten Herstellverfahrensschritt ein Stempelwerkzeug in Lageraufnahmen (4, 5, 6) des Deckelteils (1) eingepresst wird, so dass Lagersitze passgenau hergestellt werden, insbesondere wobei das Stempelwerkzeug mindestens zwei Stempel aufweist, wobei jeder der Stempel zur Ausformung eines jeweiligen Lagersitzes vorgesehen ist,
insbesondere wobei in einem zeitlich nach dem zweiten Herstellverfahrensschritt nachfolgenden, dritten Herstellverfahrensschritt im jeweiligen Lagersitz jeweils ein Lager (47) aufgenommen wird.

15. Verfahren zum Herstellen eines Antriebs,
wobei der Antrieb einen Elektromotor und ein Getriebe aufweist,
wobei das Gehäuse des Getriebes ein Gehäuseteil (40) und ein Deckelteil aufweist,
wobei das Verfahren nach Anspruch 13 zeitlich unabhängig vom Verfahren nach Anspruch 14 ausgeführt wird,
insbesondere wobei die Verfahrensschritte und die Herstellverfahrensschritte zeitlich unabhängig voneinander ausgeführt werden,
wobei nach Beendigung der beiden Verfahren Gehäuseteil (40) und Deckelteil miteinander verbunden werden.

## Claims

1. Drive, comprising an electric motor and a transmission,
wherein the housing of the transmission comprises a housing part (40) and a cover part (1), which are connected to each other,
wherein a shaft (48) of the transmission is mounted via bearings (47),
wherein a first bearing of the bearings (47) is received in a bearing receptacle (4, 5, 6) which is formed in a pot-shaped manner on the housing part (40),
wherein a second bearing of the bearings is received in a bearing receptacle (4, 5, 6) which is formed in a pot-shaped manner on the cover part (1),
**characterized in that**
a respective sealing element (46) is arranged at the bottom of the respective formed bearing receptacle and the bearing (47) received therein, each sealing element being elastically deformed such that the respective bearing (47) is pushed by the respective sealing element (46) against a respective step of the shaft (48), and such that the bearings of the shaft are biased towards each other,
wherein web regions (7) protrude axially at the bottom of the bearing receptacle (4, 5, 6), against which web regions the bearing bears such that the deformation of the respective sealing element (46) is limited by means of the web regions (7),
wherein retaining ribs (2) extend from the respective bearing receptacle (4, 5, 6) to a peripheral edge region of the cover part,
wherein a cylindrical spatial region, in which the respective bearing (47) is received and bears, is provided on the inner wall of the respective bearing receptacle (4, 5, 6) by means of a forming tool,
wherein the contact area between the bearing receptacle (4, 5, 6) and the bearing (47) is interrupted in those circumferential angle ranges in which the region spanned by the bearing receptacle (4, 5, 6) is radially more extended.

2. Drive according to claim 1,
**characterized in that**
the web regions (7) are each arranged at the same radial distance and/or are spaced apart from each other in the circumferential direction, and/or wherein the web regions (7) bear against a respective bearing (47).

3. Drive according to any one of the preceding claims,
**characterized in that**
the shaft is mounted rotatably relative to the bearing receptacle (4, 5, 6) by means of the bearing (47).

4. Drive according to any one of the preceding claims,
**characterized in that**
flat, in particular mutually flush, bearing surface regions (20) are formed on the side of the housing part (40) that faces away from the bearing seat, in particular the outer side,
that is to say in particular the bearing surface regions (20) are provided, in particular arranged, in a common plane.

5. Drive according to claim 1,
**characterized in that**
the cover part (1) has bearing receptacles (4, 5, 6), wherein a bearing seat is provided in each bearing receptacle (4, 5, 6),
in particular wherein the respective bearing seat is interrupted in the circumferential direction,
wherein flat, in particular mutually flush, bearing surface regions (20) are formed on the side of the cover part (1) that faces away from the bearing seat, in particular the outer side,
that is to say in particular the bearing surface regions are provided, in particular arranged, in a common plane.

6. Drive according to any one of the preceding claims,
**characterized in that**
a respective bearing (47) is received in the respective bearing seat with a precise fit.

7. Drive according to any one of the preceding claims,
**characterized in that**
the electric motor comprises a rotor shaft and a motor housing (41), wherein the rotor shaft is rotatably mounted in the motor housing (41) by means of at least one bearing (47),
wherein an adapter flange (43) is connected to the motor housing (41) in a rotationally fixed manner,
wherein a bayonet guide region is formed on the housing part (40),
wherein the adapter flange (43) has a tab region, in particular a bayonet projection, in particular for engaging behind the bayonet guide region.

8. Drive according to claim 7,
**characterized in that**
the bayonet guide region protrudes into a recess of the housing part (40),
wherein the bayonet guide region covers a radial distance range that is spanned by the radial distance range covered by the tab region, that is to say in particular is radially less extended than the tab region,
wherein the circumferential angle range covered by the bayonet guide region is smaller than the circumferential angle range covered by the recess,
wherein the circumferential angle range covered by the tab region is smaller in terms of absolute value than the difference between the circumferential angle range covered by the recess and the circumferential angle range covered by the bayonet guide region,
in particular such that the tab region can be introduced axially into the recess and, through rotation, engages behind the bayonet guide region.

9. Drive according to claim 7 or 8,
**characterized in that**
the axial width of the bayonet guide region increases in the circumferential direction,
in particular
- such that the tab region formed on the adapter flange (43) is axially displaced by the bayonet guide region upon rotation in the circumferential direction, in particular such that the axial position is proportional to the rotation angle position of the tab region,
- and/or such that the adapter flange (43) is pushed towards the housing part (40) when the adapter flange (43) is rotated in the circumferential direction relative to the housing part (40).

10. Drive according to any one of claims 7 to 9,
**characterized in that**
the recess is bounded in the circumferential direction by a retaining rib (2) which extends in the radial direction from a bearing receptacle (4, 5, 6) of the bearing (47) of the input shaft,
and/or **in that**
the recess is bounded counter to the circumferential direction by a further retaining rib (2) which extends in the radial direction from a bearing receptacle (4, 5, 6) of the bearing (47) of the input shaft,
in particular wherein the bayonet guide region comes into contact with the further retaining rib (2), wherein the bayonet guide region, the further retaining rib (2) and the bearing receptacle (4, 5, 6) are designed, in particular formed, in one piece, in particular as a single part.

11. Drive according to any one of claims 7 to 10,
**characterized in that**
a pin is arranged in a recess of the housing part (40), said pin being supported against the housing part (40) and being pushed in particular axially in relation to the adapter flange (43) by a spring element, in particular for locking purposes,
or **in that**
a pin is arranged in a recess of the adapter flange (43), said pin being supported against the adapter flange (43) and being pushed in particular axially in relation to the housing part (40) by a spring element, in particular for locking purposes.

12. Drive according to any one of claims 7 to 11,
**characterized in that**
web regions (7) that project axially towards the housing part (40) are formed on the adapter flange (43), each of said web regions protruding into a respective annular groove of the housing part (40) and thus acting as a guide during the rotational movement of the adapter flange (43) relative to the housing part (40),
wherein the radial distance range covered by the respective web region (7) is independent of the circumferential angle,
in particular wherein the respective web region (7) extends in the circumferential direction,
in particular wherein the web regions are arranged at the same radial distance, but are spaced apart from each other in the circumferential direction.

13. Method for producing a drive according to any one of claims 1 to 12,
wherein the drive comprises an electric motor and a transmission,
wherein the housing of the transmission comprises a housing part (40) and a cover part,
**characterized in that**
in a first method step the housing part (40) is produced by casting,
then in a second method step a die-stamping tool is pressed into bearing receptacles (4, 5, 6) of the housing part (40) such that bearing seats are produced with a precise fit, in particular wherein the die-stamping tool comprises at least two dies, wherein each of the dies is provided for forming a respective bearing seat,
in particular wherein, in a third method step that follows the second method step in terms of time, in each case one bearing (47) is received in the respective bearing seat.

14. Method for producing a drive according to any one of claims 1 to 12,
wherein the drive comprises an electric motor and a transmission,
wherein the housing of the transmission comprises a housing part . (40) and a cover part,
**characterized in that**
in a first production method step the cover part is produced by casting,
then in a second production method step a die-stamping tool is pressed into bearing receptacles (4, 5, 6) of the cover part (1) such that bearing seats are produced with a precise fit, in particular wherein the die-stamping tool comprises at least two dies, wherein each of the dies is provided for forming a respective bearing seat,
in particular wherein, in a third production method step that follows the second production method step in terms of time, in each case one bearing (47) is received in the respective bearing seat.

15. Method for producing a drive,
wherein the drive comprises an electric motor and a transmission,
wherein the housing of the transmission comprises a housing part (40) and a cover part,
wherein the method according to claim 13 is carried out independently of the method according to claim 14 in terms of time,
in particular wherein the method steps and the production method steps are carried out independently of each other in terms of time,
wherein upon completion of the two methods the housing part (40) and the cover part are connected to each other.

## Revendications

1. Entraînement, comprenant un moteur électrique et une transmission,
le carter de la transmission présentant une partie carter (40) et une partie couvercle (1) qui sont reliées entre elles,
un arbre (48) de la transmission étant monté au moyen de paliers (47),
un premier palier des paliers (47) étant logé dans un logement de palier (4, 5, 6) en forme de pot sur la partie carter (40),
un deuxième palier des paliers étant logé dans un logement de palier (4, 5, 6) en forme de pot sur la partie couvercle (1),
**caractérisé en ce que**
un élément d'étanchéité respectif (46) est disposé au fond du logement de palier respectif formé et du palier (47) logé dans celui-ci, lequel est chaque fois déformé élastiquement, de sorte que le palier respectif (47) est pressé par l'élément d'étanchéité respectif (46) contre un gradin respectif de l'arbre (48) et de sorte que les paliers de l'arbre sont serrés l'un contre l'autre,
des zones saillantes (7) faisant saillie axialement du fond du logement de palier (4, 5, 6), contre lesquelles le palier s'appuie, de sorte que la déformation de l'élément d'étanchéité respectif (46) est limitée au moyen des zones saillantes (7),
des nervures de retenue (2) s'étendant du logement de palier respectif (4, 5, 6) vers une zone de bord périphérique de la partie couvercle,
une zone d'espace cylindrique étant réalisée sur la paroi intérieure du logement de palier respectif (4, 5, 6) au moyen d'un outil de formage, dans laquelle le palier respectif (47) est logé et s'applique,
dans les zones angulaires circonférentielles, la zone comprise par le logement de palier (4, 5, 6) étant plus étendue radialement, de sorte que la surface de contact entre le logement de palier (4, 5, 6) et le palier (47) est interrompue.

2. Entraînement selon la revendication 1,
**caractérisé en ce que**
les zones saillantes (7) sont disposées respectivement à la même distance radiale et/ou sont espacées les unes des autres dans la direction circonférentielle et/ou les zones saillantes (7) s'appliquent contre un palier respectif (47).

3. Entraînement selon l'une des revendications précédentes,
**caractérisé en ce que**
l'arbre est monté rotatif par rapport au logement de palier (4, 5, 6) au moyen du palier (47).

4. Entraînement selon l'une des revendications précédentes,
**caractérisé en ce que**
des zones de surface d'appui (20) planes, en particulier alignées les unes sur les autres, sont formées sur le côté, en particulier le côté extérieur, de la partie carter (40) qui est éloigné du siège de palier,
en particulier, les zones de surface d'appui (20) sont donc prévues, en particulier disposées, dans un plan commun.

5. Entraînement selon la revendication 1,
**caractérisé en ce que**
la partie couvercle (1) présente des logements de palier (4, 5, 6), un siège de palier étant prévu dans chaque logement de palier (4, 5, 6),
en particulier le siège de palier respectif étant réalisé interrompu dans la direction circonférentielle,
des zones de surface d'appui (20) planes, en particulier alignées les unes sur les autres, étant formées sur le côté, en particulier le côté extérieur, de la partie couvercle (1) qui est éloigné du siège de palier,
en particulier, les zones de surface d'appui sont donc prévues, en particulier disposées, dans un plan commun.

6. Entraînement selon l'une des revendications précédentes,
**caractérisé en ce que**
un palier respectif (47) est logé en ajustement précis dans le logement de palier respectif.

7. Entraînement selon l'une des revendications précédentes,
**caractérisé en ce que**
le moteur électrique présente un arbre de rotor et un carter de moteur (41), l'arbre de rotor étant monté rotatif dans le carter de moteur (41) au moyen d'au moins un palier (47),
une bride d'adaptation (43) étant reliée de manière solidaire en rotation au carter de moteur (41),
une zone de guidage à baïonnette est formée sur la partie carter (40),
la bride d'adaptation (43) présentant une zone formant patte, en particulier un nez de baïonnette, en particulier destinée à venir en prise derrière la zone de guidage à baïonnette.

8. Entraînement selon la revendication 7,
**caractérisé en ce que**
la zone de guidage à baïonnette pénètre dans un évidement de la partie carter (40), la zone de guidage à baïonnette couvrant une zone de distance radiale qui est comprise par la zone de distance radiale couverte par la zone formant patte et qui est donc en particulier moins étendue radialement que la zone formant patte,
la zone angulaire circonférentielle couverte par la zone de guidage à baïonnette étant plus petite que la zone angulaire circonférentielle couverte par l'évidement,
la zone angulaire circonférentielle couverte par la zone formant patte étant plus petite en valeur absolue que la différence entre la zone angulaire circonférentielle couverte par l'évidement et la zone angulaire circonférentielle couverte par la zone de guidage à baïonnette,
en particulier de telle sorte que la zone formant patte puisse être introduite axialement dans l'évidement et venir en prise derrière la zone de guidage à baïonnette par rotation.

9. Entraînement selon la revendication 7 ou 8,
**caractérisé en ce que**
la largeur axiale de la zone de guidage à baïonnette augmente dans la direction circonférentielle,
en particulier
- de telle sorte que la zone formant patte formée sur la bride d'adaptation (43) est déplacée axialement par la zone de guidage à baïonnette lors de la rotation dans la direction circonférentielle, en particulier de telle sorte que la position axiale est proportionnelle à la position angulaire de rotation de la zone formant patte,
- et/ou de telle sorte que la bride d'adaptation (43) est poussée vers la partie carter (40) lors de la rotation relative de la bride d'adaptation (43) par rapport à la partie carter (40) dans la direction circonférentielle.

10. Entraînement selon l'une des revendications 7 à 9,
**caractérisé en ce que**
l'évidement est délimité dans la direction circonférentielle par une nervure de retenue (2) qui s'étend dans la direction radiale depuis un logement de palier (4, 5, 6) du palier (47) de l'arbre d'entrée,
et/ou **en ce que**
l'évidement est délimité à l'encontre de la direction circonférentielle par une autre nervure de retenue (2) qui s'étend dans la direction radiale depuis un logement de palier (4, 5, 6) du palier (47) de l'arbre d'entrée,
en particulier, la zone de guidage à baïonnette étant en contact avec l'autre nervure de retenue (2), la zone de guidage à baïonnette, l'autre nervure de retenue (2) et le logement de palier (4, 5, 6) étant réalisés, en particulier formés, d'une seule pièce.

11. Entraînement selon l'une des revendications 7 à 10,
**caractérisé en ce que**
dans un évidement de la partie carter (40) est disposé un boulon prenant appui sur la partie carter (40), lequel est poussé par un élément élastique, en particulier axialement par rapport à la bride d'adaptation (43), en particulier pour le blocage, ou **en ce que**
dans un évidement de la bride d'adaptation (43) est disposé un boulon prenant appui sur la bride d'adaptation (43), lequel est poussé par un élément élastique, en particulier axialement par rapport à la partie carter (40), en particulier pour le blocage.

12. Entraînement selon l'une des revendications 7 à 11,
**caractérisé en ce que**
des zones saillantes (7) faisant saillie axialement vers la partie carter (40) sont formées sur la bride d'adaptation (43), lesquelles pénètrent respectivement dans une rainure annulaire respective de la partie carter (40) et agissent ainsi comme guidage lors du mouvement de rotation de la bride d'adaptation (43) par rapport à la partie carter (40),
la zone de distance radiale couverte par la zone saillante respective (7) étant indépendante de l'angle circonférentiel,
en particulier, la zone saillante respective (7) s'étendant dans la direction circonférentielle,
en particulier, les zones saillantes étant certes disposées à la même distance radiale, mais étant espacées les unes des autres dans la direction circonférentielle.

13. Procédé de fabrication d'un entraînement selon l'une des revendications 1 à 12, l'entraînement présentant un moteur électrique et une transmission,
le carter de la transmission présentant une partie carter (40) et une partie couvercle, **caractérisé en ce que**,
dans une première étape du procédé, la partie carter (40) est fabriquée par coulée, ensuite, dans une deuxième étape du procédé, un outil de poinçonnage est enfoncé dans des logements de palier (4, 5, 6) de la partie carter (40) de sorte que des sièges de palier sont fabriqués en ajustement précis, en particulier l'outil de poinçonnage présentant au moins deux poinçons, chacun des poinçons étant prévu pour former un siège de palier respectif,
en particulier, dans une troisième étape du procédé suivant chronologiquement la deuxième étape du procédé, un palier respectif (47) étant logé dans le siège de palier respectif.

14. Procédé de fabrication d'un entraînement selon l'une des revendications 1 à 12, l'entraînement présentant un moteur électrique et une transmission,
le carter de la transmission présentant une partie carter (40) et une partie couvercle, **caractérisé en ce que**,
dans une première étape du procédé de fabrication, la partie couvercle est fabriquée par coulée,
ensuite, dans une deuxième étape du procédé de fabrication, un outil de poinçonnage est enfoncé dans des logements de palier (4, 5, 6) de la partie couvercle (1) de sorte que des sièges de palier sont fabriqués en ajustement précis, en particulier l'outil de poinçonnage présentant au moins deux poinçons, chacun des poinçons étant prévu pour former un siège de palier respectif,
en particulier, dans une troisième étape du procédé de fabrication suivant chronologiquement la deuxième étape du procédé de fabrication, un palier respectif (47) est logé dans le siège de palier respectif.

15. Procédé de fabrication d'un entraînement,
l'entraînement présentant un moteur électrique et une transmission,
le carter de la transmission présentant une partie carter (40) et une partie couvercle, le procédé selon la revendication 13 étant exécuté indépendamment dans le temps du procédé selon la revendication 14,
en particulier, les étapes du procédé et les étapes du procédé de fabrication étant exécutées indépendamment les unes des autres dans le temps,
la partie carter (40) et la partie couvercle étant reliées entre elles à la fin des deux procédés.
